# EUROPEAN PATENT APPLICATION

(11) **EP 1 605 715 A2**
(43) Date of publication of application: **14.12.2005**
(21) Application number: 05090165.1
(22) Date of filing: 09.06.2005
(51) Int. Cl.: H04Q 7/30

(54) **Mobile network, wireless network multiplexer and communication path control method to be used in same network**

(30) Priority: 09.06.2004 JP 2004170615
(71) Applicant: NEC CORPORATION, Minato-ku, Tokyo 108-01 (JP)
(72) Inventor: Ohta, Masato, Minato-ku Tokyo 108-01 (JP)
(74) Representative: Wenzel & Kalkoff

(57) **Abstract**

A mobile network is provided which is capable of expanding a communication area of mobile communications without causing an increase in installation space and in a cost burden to a mobile telecommunication carrier. A wireless network multiplexing unit (4) is installed between a wireless network controlling unit (1) and wireless base stations (3-1 to 3-n) and the wireless base stations (2-1 to 2-m) are connected directly to the wireless network controlling unit (1). A single wireless network multiplexing unit (4) is recognized by the wireless network controlling unit (1) as a virtual wireless base station and the wireless base stations (3-1 to 3-n) which each operate under the direct control of the wireless network multiplexing unit (4) are not recognized by the wireless network controlling unit (1). As a result, a single wireless network controlling unit (1) can be connected to up to several tens of units including the wireless network multiplexing unit (4) and the wireless base stations (2-1 to 2-m) each operating under the direct control of the wireless network controlling unit (1).

## Description

### BACKGROUND OF THE INVENTION

### Field of the Invention

The present invention relates to a mobile network, a wireless network multiplexer, and a method for controlling a communication path to be used for the mobile network, and more particularly to a mobile network, a wireless network multiplexer, and a method for controlling a communication path to be used for the mobile network which are capable of expanding a communication area of mobile communications.

The present application claims priority of Japanese Patent Application No. 2004-170615 filed on June 9, 2004, which is hereby incorporated by reference.

### Description of the Related Art

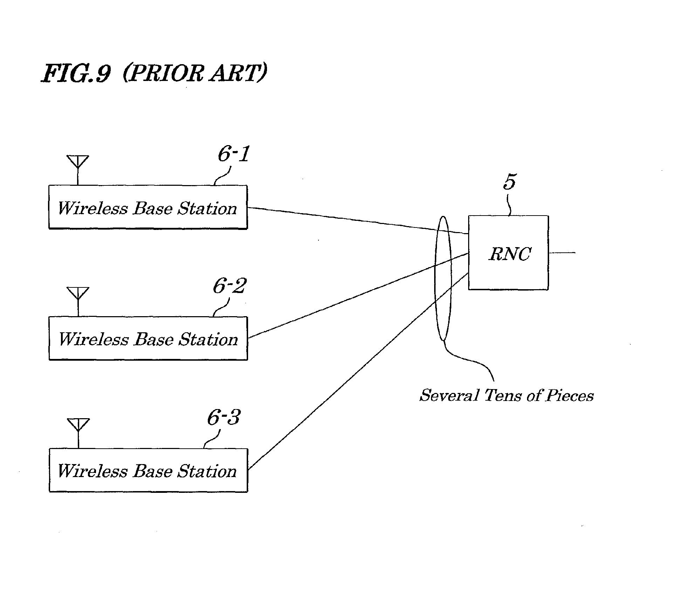

In a conventional mobile network, as shown in Fig. 9, wireless base stations (each referred to as Node-B) 6-1 to 6-3 are connected to a radio network controller (RNC) 5 which exercises control on the wireless base stations 6-1 to 6-3 operating under the control of the radio network controller 5.

As methods for expanding a communication area of the above mobile telecommunications, there are disclosed (1) a method by which transmission power supplied from the wireless base stations 6-1 to 6-3 is increased, (2) another method by which signal receiving sensitivity of a mobile telecommunication terminal is increased, and (3) another method by which wireless base stations 6-1 to 6-3 are located in a more expanded region (see, for example, Japanese Patent Application Laid-open No. Hei 06-261362).

In the case of the method by which transmission power supplied from the wireless base stations 6-1 to 6-3 is increased, there is a problem in that the increase of transmission power may cause interference with other devices. In the case of the method by which receiving sensitivity of the mobile telecommunication terminal is increased, the increase of receiving sensitivity causes tremendous consumption of the battery of the mobile telecommunication terminal, which should be strictly avoided.

In the case of the method by which the many wireless base stations 6-1 to 6-3 are placed indoors in adverse environments, limitations are imposed on the number of the wireless base stations 6-1 to 6-3 that can be connected to one unit of the radio network controller 5 being placed on a side of a core network of the wireless base stations 6-1 to 6-3, which causes an increase in expenses and installation space.

In the present W-CDMA (Wideband-Code Division Multiple Access) system, the radio network controller 5 exercises control on the wireless base stations operating under the control of the radio network controller 5 and, from the viewpoint of processing capability, limitations are imposed on the number of wireless base stations operating under the control of the radio network controller 5 that can be connected to the radio network controller 5.

Thus, in order to expand the communication area of mobile communications, it is preferable to locate numerous additional wireless base stations in an area desired to be expanded; however, since the number of units of the wireless base stations that can be connected to one radio network controller is limited, purchase of a radio network controller may possibly be required and installation space not only for the wireles base stations but also for the radio network controller is needed and, since the mobile network communication device is expensive, there is a problem that the purchase of the radio network controller by a mobile communication carrier becomes a burden in terms of costs.

### SUMMARY OF THE INVENTION

In view of the above, it is an object of the present invention to provide a mobile network, a wireless network multiplexer, and a communication path control method to be applied to the mobile network and the wireless network multiplexer which are capable of expanding the communication area of mobile telecommunications without causing an increase in installation space and in cost burdens to a mobile communication carrier.

According to a first aspect of the present invention, there is provided a mobile network including:
a plurality of first wireless base stations to which first mobile telecommunication terminals are connected;
a plurality of second wireless base stations to which second mobile telecommunication terminals are connected;
a wireless network controlling unit to control the first and second wireless base stations; and
at least one wireless network multiplexing unit installed between the second wireless base stations and the wireless network controlling unit and used to connect the second wireless base stations to the wireless network controlling unit.

In the foregoing first aspect, a preferable mode is one
wherein the wireless network controlling unit recognizes the wireless network multiplexing unit to be connected to the wireless network controlling unit as a single virtual first wireless base station.

Also, a preferable mode is one wherein the wireless network multiplexing unit includes an identification tag assigning section to assign an identification tag to identify each of the second wireless base stations, at time of start of operations of the wireless network multiplexing unit and of the second wireless base stations operating under direct control of the wireless network multiplexing unit.

Also, a preferable mode is one wherein the wireless network multiplexing unit includes a storage device to store corresponding relations between the identification tags and the second wireless base stations operating under the direct control of the wireless network multiplexing unit.

Also, a preferable mode is one wherein the wireless network multiplexing unit relays a signal between the second wireless base stations and the wireless network controlling unit according to the identification tag.

Also, a preferable mode is one wherein the wireless network controlling unit is configured not to use the identification tag for processing to be performed on the second wireless base stations.

Also, a preferable mode is one wherein the second wireless base stations operating under the direct control of the wireless network multiplexing unit each add the identification tag to a signal to be transmitted from each of the second wireless base stations to the wireless network controlling unit.

According to a second aspect of the present invention, there is provided a wireless network multiplexing unit which makes up a mobile network together with: a plurality of first wireless base stations to which first mobile telecommunication terminals are connected; a plurality of second wireless base stations to which second mobile telecommunication terminals are connected; a wireless network controlling unit to control the first and second wireless base stations; the wireless network multiplexing unit which is installed between the second wireless base stations and the wireless network controlling unit and used to connect the second wireless base stations to the wireless network controlling unit.

In the foregoing second aspect, a preferable mode is one
wherein the wireless network multiplexing unit is recognized as a single virtual first wireless base station by the wireless network controlling unit.

Also, a preferable mode is one that includes an identification tag assigning section to assign an identification tag to identify each of the second wireless base stations, at time of start of operations of the wireless network multiplexing unit and of the second wireless base stations operating under a direct control of the wireless network multiplexing unit.

Also, a preferable mode is one that includes a storage device to store corresponding relations between the identification tags and the second wireless base stations operating under the direct control of the wireless network multiplexing unit.

Also, a preferable mode is one that is so configured to relay a signal between the second wireless base stations and the wireless network controlling unit according to the identification tag.

Also, a preferable mode is one wherein the second wireless base stations operating under the direct control of the wireless network multiplexing unit each are configured to add the identification tag to a signal to be transmitted from each of the second wireless base stations to the wireless network controlling unit.

According to a third aspect of the present invention, there is provided a method for controlling a communication path for controlling a communication path of a mobile network including:
a plurality of first wireless base stations to which first mobile telecommunication terminals are connected;
a plurality of second wireless base stations to which second mobile telecommunication terminals are connected;
a wireless network controlling unit to control the first and second wireless base stations; the method including:
   installing at least one wireless network multiplexing unit between the second wireless base stations and the wireless network controlling unit; and
   connecting the second wireless base stations to the wireless network controlling unit via the wireless network multiplexing unit.

In the foregoing third aspect, a preferable mode is one
wherein the wireless network controlling unit recognizes the wireless network multiplexing unit to be connected to the wireless network controlling unit as a single virtual first wireless base station.

Also, a preferable mode is one wherein the wireless network multiplexing unit performs an identification tag assigning process to assign an identification tag to identify each of the second wireless base stations, at time of start of operations of the wireless network multiplexing unit and of the second wireless base stations operating under direct control of the wireless network multiplexing unit.

Also, a preferable mode is one wherein the wireless network multiplexing unit performs a storing process to store corresponding relations between the identification tags and the second wireless base stations operating under direct control of the wireless network multiplexing unit.

Also, a preferable mode is one wherein the wireless network multiplexing unit relays a signal between the second wireless base stations and the wireless network controlling unit according to the identification tag.

Also, a preferable mode is one wherein the wirless network controlling unit is configured not to use the identification tag for processing to be performed on the second wireless base stations.

Furthermore, a preferable mode is one wherein the second wireless base stations operating under direct control of the wireless network multiplexing unit each add the identification tag to a signal to be transmitted from each of the second wireless base stations to the wireless network controlling unit.

By configuring as above, in the W-CDMA system, the second wireless base stations exceeding a designated number can be connected to the wireless network controlling unit.

More specifically, by mounting the wireless network multiplexing unit between the wireless network controlling unit and the second wireless base stations and by connecting the second wireless base stations to the wireless network controlling unit through the wireless network multiplexing unit, the second wireless base stations exceeding a limited number that had been imposed on the conventional wireless base stations can be connected to one unit of the wireless network controlling unit.

Thus, according to the mobile network of the present invention, most of the costs required for the network construction are expended only to install the wireless network multiplexing unit between the wireless network controlling unit and the second wireless base station and, therefore, costs for installation of the wireless network controlling unit can be reduced, and as a result, expenses that a communication carrier must bear can be reduced.

In addition, configurations and functions of the wireless network multiplexing unit are simpler than those of the wireless network controlling unit and, therefore, a space required for installing the wireless network multiplexing unit can be reduced.

Also, according to the mobile network of the present invention, the wireless network multiplexing unit is installed between the wireless network controlling unit and the second wireless base station, instead of the addition of the wireless network controlling unit being much larger in size, and much higher in cost, and, therefore, the second wireless base station can be located in a small community existing in a valley or in a place between mountains, below ground level, indoors, or the like, without being influenced by limitations of the wireless network controlling unit in size and cost, which enables expansion of the communication area.

In addition, the second wireless base station can be located even in an area in which the quality of communication degrades, even if the area is not within a valley or in a place between mountains, below ground level, indoors, without being influenced by the above limitations of the wireless network controlling unit, whereby communication quality can be improved.

With the above configurations, the communication area of mobile telecommunications can be expanded without an increase in installation space and in cost burdens to the mobile communication carrier.

### BRIEF DESCRIPTION OF THE DRAWINGS

The above and other objects, advantages, and features of the present invention will be more apparent from the following description taken in conjunction with the accompanying drawings
in which:
Fig. 1 is a schematic block diagram showing configurations of a mobile network according to an embodiment of the present invention;
Fig. 2 is a schematic block diagram showing configurations of a Radio Access Network Mulitplexer (RAN-MUX) of Fig. 1;
Fig. 3 is a sequence chart showing an RRC (Radio Resource Controller) connection procedure (Request) employed in the embodiment of the present invention;
Fig. 4 is a sequence chart showing a radio link setup procedure employed in the embodiment of the present invention;
Fig. 5 is a sequence chart showing a connection setup procedure employed in the embodiment of the present invention;
Fig. 6 is a sequence chart showing an RRC connection setup (Response) procedure employed in the embodiment of the present invention;
Fig. 7 is a sequence chart showing a DCH (Dedicated CHannel) synchronization procedure employed in the embodiment of the present invention;
Fig. 8 is a diagram showing an example of an installation of the mobile network of the embodiment of the present invention; and
Fig. 9 is a schematic block diagram showing configurations of a conventional mobile network.

### DETAILED DESCRIPTION OF THE PREFERRED EMBODIMENTS

Best modes of carrying out the present invention will be described in further detail using various embodiments with reference to the accompanying drawings.

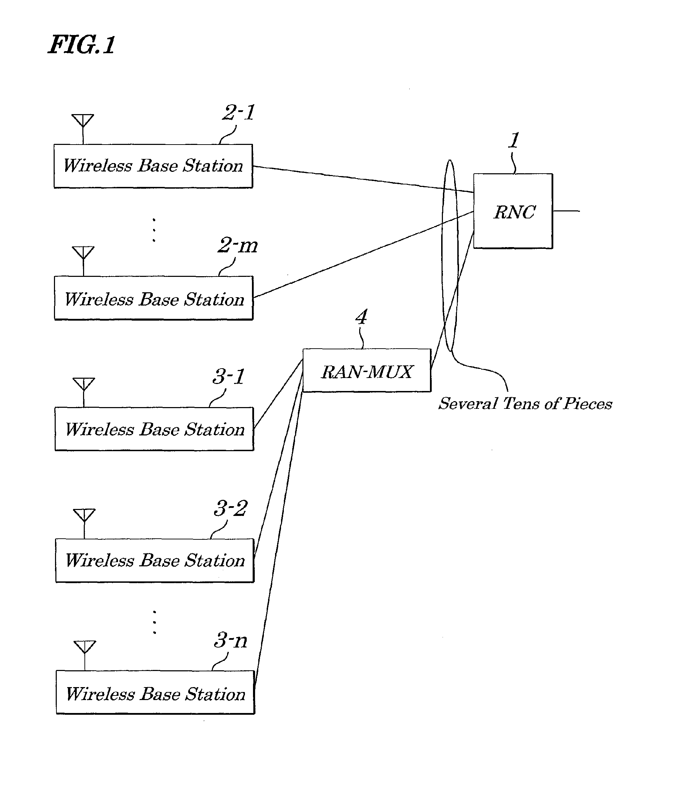

Figure 1 is a schematic block diagram showing configurations of a mobile network according to an embodiment of the present invention. The mobile network of the embodiment of the present invention, as shown in Fig. 1, includes a radio network controller (RNC) 1, wireless base stations (each referred to as Node-B) 2-1 to 2-m and 3-1 to 3-n, and a radio access network multiplexer 4 (RAN-MUX). The radio access network mulitplexer 4 is placed between the radio network controller 1 and the wireless base stations 3-1 to 3-n and the wireless base stations 2-1 to 2-m are directly connected to the radio network controller 1.

The radio network controller 1 recognizes a single radio access network mulitplexer 4 as a virtual wireless base station and the wireless base stations 3-1 to 3-n which each operate under the control of the radio access network mulitplexer 4 are not recognized by the radio network controller 1. Therefore, up to several tens of units including the radio access network mulitplexer 4 and the wireless base stations 2-1 to 2-m which each operate under the direct control of the radio network controller 1 can be connected to a single radio network controller 1. Since configurations of the radio access network multiplexer 4 are simpler than those of the radio network controller 1, purchase costs of the radio access network mulitplexer 4 are lower than those of the radio network controller 1 and space saving of the radio access network mulitplexer 4 is greater than that of the radio network controller 1. As a result, according to the embodiment, by connecting the wireless base stations 3-1 to 3-n to the radio network controller 1 through the radio access network mulitplexer 4, communications among several ten units, which exceeds limitations of the number of the units, of the wireless base stations can be carried out.

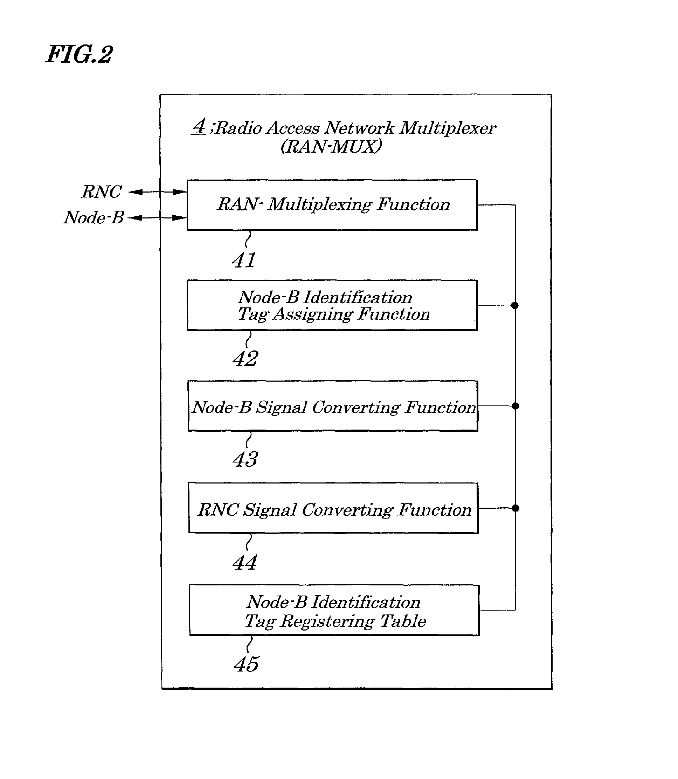

Figure 2 is a schematic block diagram showing configurations of the radio access network mulitplexer 4 of Fig. 1. As shown in Fig. 2, the radio access network mulitplexer 4 includes a RAN-multiplexing function 41, a Node-B identification tag assigning function 42, a Node-B signal converting function 43, an RNC (radio network controller) signal converting function 44, and a Node-B identification tag registering table 45.

The RAN-multiplexing function 41 is a function to connect the wireless base stations 3-1 to 3-n operating under the control of the radio access network mulitplexer 4 to the radio network controller 1 and performs processing of signals input and output to and from the wireless base stations 3-1 to 3-n and radio network controller 1.

The Node-B identification tag assigning function 42 performs processing of assigning the Node-B identification tag to each of the wireless base stations 3-1 to 3-n operating under the control of the radio access network mulitplexer 4. The Node-B signal converting function 43 performs processing of converting signals to transfer a request signal, a response signal, or a like fed from the wireless base stations 3-1 to 3-n operating under the control of the radio access network mulitplexer 4 to the radio network controller 1.

The RNC signal converting function 44 performs processing of converting signals to transfer a request signal, a response signal, or a like fed from the radio network controller 1 to each of the wireless base stations 3-1 to 3-n operating under the control of the radio access network mulitplexer 4. The Node-identification tag registering table 45 maintains relations between each of the wireless base stations 3-1 to 3-n operating under the control of the radio access network mulitplexer 4 and a corresponding Node-B identification tag assigned to each of the wireless base stations 3-1 to 3-n.

Next, initial procedures for communications in a mobile network according to the embodiment of the present invention are described briefly. The initial procedures are performed in the order of (1) assignment of the Node-B identification tag, (2) RACH (RRC Connection), (3) NBAP (Radio Link Setup), (4) ALCAP (Access Link Control Application Protocol) (Connection Setup), (5) FACH (RRC Connection Setup), and (6) DCH (DCH Synchronization); where RACH is an abbreviation for "Random Access CHannel", NBAP is an abbreviation for "Node-B Application Protocol", FACH is an abbreviation for "Forward Access Channel", and DCH is an abbreviation for "Dedicated CHannel".

The above procedure (1), the assignment of the Node-B identification tag, is a procedure to identify the wireless base stations 3-1 to 3-n operating under the control of the radio access network mulitplexer 4. The above procedure (2), the RACH (RRC Connection), is a procedure to establish the RRC connection. The above procedure (3), the NBAP (Radio Link Setup), is a procedure to obtain a resource required for new Node B Communication Context of the wireless base stations 3-1 to 3- n. The above procedure (4), the ALCAP (Connection Setup), is a procedure to establish connection of AAL (ATM (Asynchronous Transfer Mode) Adaptation Layer) type 2. The above procedure (5), the FACH (RRC Connection Setup), is a procedure to establish the RRC connection. The above procedure (6), the DCH (DCH Synchronization), is a procedure for synchronization between individual channels in the radio access network mulitplexer 4.

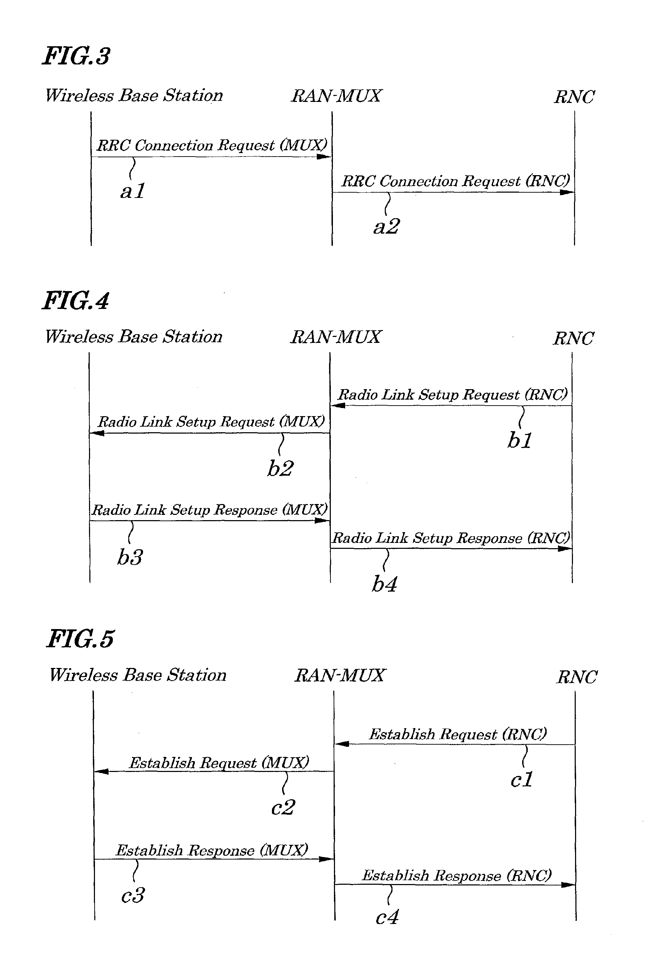

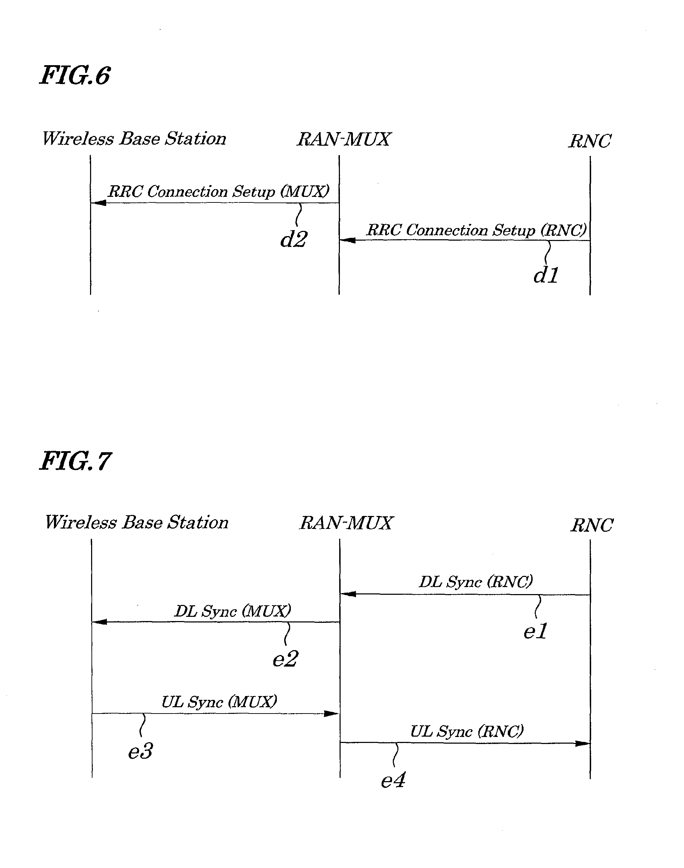

Figure 3 is a sequence chart showing an RRC connection procedure (Request) employed in the embodiment of the present invention. Figure 4 is a sequence chart showing a radio link setup procedure employed in the embodiment. Figure 5 is a sequence chart showing a connection setup procedure employed in the embodiment.

Figure 6 is a sequence chart showing an RRC connection setup (Response) procedure employed in the embodiment of the present invention. Figure 7 is a sequence chart showing a DCH (Dedicated Channel) synchronization procedure employed in the embodiment. The communication initial procedures in the mobile network of the embodiment of the present invention are described by referring to Figs. 1 to 7.

In the above procedure (1), the assignment of the Node-B identification tag, the radio access network mulitplexer 4, at time of a start of operating the radio access network mulitplexer 4 or of operating each of the wireless base stations 3-1 to 3-n, assigns an individual Node-B identification tag corresponding to each of the wireless base stations 3-1 to 3-n
by using its Node-B identification tag assigning function 42. The Node-B identification tag does not exert any influence on a wireless base station other than the wireless base stations 3-1 to 3-n under the control of the radio access network mulitplexer 4.

In the above procedure (2), the RACH (RRC Connection), each of the wireless base stations 3-1 to 3-n, when an "RRC connection request" signal is transmitted from an MS (Mobile Station), adds a Node-B identification tag assigned to the radio access network mulitplexer 4 to a last one of its request signal and produces an "RRC connection request (MUK)" signal and transmits the produced signal to the radio access network mulitplexer 4 (see Fig. 3 (a1)).

The radio access network mulitplexer 4 converts the "RRC connection request (MUK)" signal transmitted from the wireless base stations 3-1 to 3-n into an "RRC connection request (RNC)" signal by using the Node-B signal converting function 43 and transmits the converted signal to the radio network controller 1 (see Fig. 3 (a2)). Moreover, the radio access network mulitplexer 4 stores relations between the wireless base stations 3-1 to 3-n and the Node-B identification tags in the Node-B identification tag registering table 45.

The radio network controller 1 temporarily stores the "RRC connection request (RNC) " signal fed from the radio access network mulitplexer 4 until the above procedure (4), the ALCAP (Connection Setup) is completed. In this case, the radio network controller 1 does not use (or is not aware of) the Node-B identification tag for processing to the wireless base stations 3-1 to 3-n.

In the above procedure (3), the NBAP (Radio Link Setup), the radio network controller 1 transmits an "radio link setup request (RNC)" signal having the Node-B identification tag to the radio access network mulitplexer 4 (see Fig. 4(b1)).

The radio access network mulitplexer 4 converts the "radio link setup request (RNC)" signal fed from the radio network controller 1 into an "radio link setup request (MUX)" signal by using the RNC signal converting function 44 and transmits the converted signal to the wireless base stations 3-1 to 3-n in accordance with the Node-B identification tag (see Fig. 4(b2)).

Each of the wireless base stations 3-1 to 3-n, when receiving the "radio link setup request (MUX) " signal, transmits the "radio link setup request (MUX)" signal to the radio access network mulitplexer 4 (see Fig. 4(b3)).

The radio access network mulitplexer 4 converts a "radio link setup response (MUX)" signal fed from the wireless base stations 3-1 to 3-n into an "radio link setup response (RNC)" signal by using the Node-B signal converting function 43 and transmits the signal to the radio network controller 1 (see Fig. 4(b4)).

In the above procedure (4), the ALCAP (Connection Setup), the radio network controller 1 transmits an "establish request (RNC)" signal having information about VPI (Virtual Path Identification)/ VCI (Virtual Channel Identifier)/ CID (Cell Identifier)/ Node -B identification tag to the radio access network mulitplexer 4 (Fig. 5(c1)).

The radio access network mulitplexer 4 specifies the wireless base stations 3-1 to 3-n to which a signal is to be transmitted according to the Node-B identification tag contained in the "establish request (RNC)" signal and stores relations between the VPI/ VCI/ CID and the wireless base stations 3-1 to 3-n in the Node-B identification tag registering table 45. The radio access network mulitplexer 4 transmits an "establish request (MUX)" signal to the specified wireless base stations 3-1 to 3-n (Fig. 5(c2)).

The wireless base stations 3-1 to 3-n, when receiving the "establish request (MUX)" signal, transmit an "establish response (MUX)" signal to the radio access network mulitplexer 4 (see Fig. 5(c3)).

The radio access network mulitplexer 4 converts the "establish response (MUX)" signal fed from the wireless base stations 3-1 to 3-n into an "establish response (RNC)" signal by using the Node-B signal converting function 43 and transmits the converted signal to the radio network controller 1 (see Fig. 5(c4)).

In the above procedure (5), the FACH (RRC Connection Setup), the radio network controller 1 transmits an "RRC connection setup (RNC)" signal, with a tag used to designate the wireless base stations 3-1 to 3-n being attached, to the radio access network mulitplexer 4 (see Fig. 6 (d1)).

The radio access network mulitplexer 4 identifies the designation tag of the "RRC connection setup (RNC)"signal and designates the wireless base stations 3-1 to 3-n to which a signal is to be transmitted. The radio access network mulitplexer 4 converts the "RRC connection setup (RNC)" signal into an "RRC connection setup (MUX) " signal by using the RNC signal converting function 44 and transmits the converted signal to the designated wireless base stations 3-1 to 3-n ((Fig. 6 (d2)).

At this time point, the radio access network mulitplexer 4 erases the "RRC connection request (RNC)" signal being temporarily stored.

In the above procedure (6), the DCH (DCH Synchronization), the radio network controller 1 transmits a "DL (Downlink) sync (RNC) " signal containing VPI/ VCI/ CID signals to the radio access network multiplexer 4 (see Fig. 7 (e1)).

The radio access network mulitplexer 4 identifies the wireless base stations 3-1 to 3-n to which a signal is to be transmitted using link information contained in the "DL sync (RNC)" signal and converts the "DL sync (RNC)" signal to a "DL sync (MUX)" signal using the RNC signal converting function 44 and transmits the converted signal to the identified wireless base stations 3-1 to 3-n (see Fig. 7 (e2)).

The wireless base stations 3-1 to 3-n, when receiving the "DL Sync (MUX)" signal, transmit an "UL (Uplink) sync (MUX)" signal to the radio access network mulitplexer 4 (Fig. 7 (e3)). The radio access network mulitplexer 4 converts the "UL Sync (MUX) " signal to an "UL sync (RNC) " signal using the Node-B signal converting function 43 and transmits the converted signal to the radio network controller 1 (Fig. 7 (e4)).

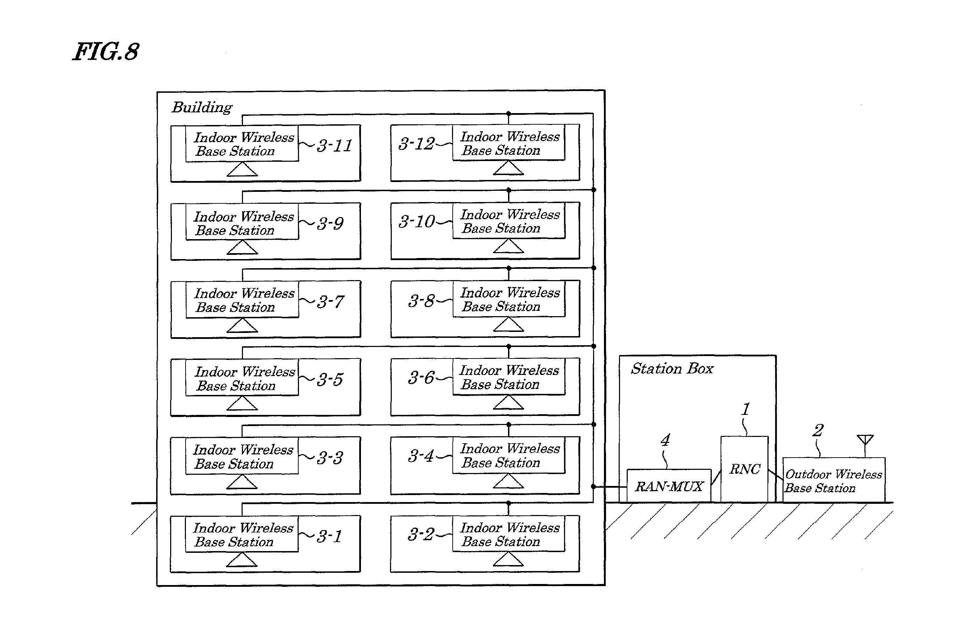

Figure 8 is a diagram showing an example of installation of the mobile network of the embodiment of the present invention. As shown in Fig. 8, the radio network controller 1 being installed in a station box is connected to the radio access network mulitplexer 4 and also to an outdoor wireless base station 2 being installed out of the station box. The radio access network mulitplexer 4 is connected to indoor wireless base stations 3-1 to 3-12 in a building.

The radio network controller 1 recognizes a single radio access network mulitplexer 4 as a virtual wireless base station and does not recognize the indoor wireless stations 3-1 to 3-12 operating under the control of the radio access network mulitplexer 4. Therefore, a single radio network controller 1 can be connected to up to several tens of units, including the radio access network mulitplexers 4, 4, ... and the outdoor wireless base stations 2 which each operate under the direct control of the radio network controller 1. The number of units of the indoor wireless base stations 3-1 to 3-12, which can be connected to the radio access network mulitplexer 4 and operate under the control of the radio access network mulitplexer 4, depends upon processing capability of the radio access network mulitplexer 4.

Thus, according to the mobile network of the embodiment, most of the costs required for the network construction are expended only to install the radio access network mulitplexer 4 between the radio network controller 1 and the wireless base stations 3-1 to 3-n and, therefore, costs for installation of the radio network controller 1 can be reduced, and as a result, expenses that a communication carrier must bear can be reduced.

In addition, configurations and functions of the radio access network mulitplexer 4 are simpler than those of the radio network controller 1 and, therefore,the space required for installing the radio access network mulitplexer 4 can be reduced.

Also, according to the mobile network of the embodiment, the radio access network mulitplexer 4 is installed between the radio network controller 1 and the wireless base stations 3-1 to 3-n, instead of the addition of the radio network controller 1 being much larger in size, and much higher in cost, and, therefore, the wireless base stations 3-1 to 3-n can be located in a small community existing in a valley or in a place between mountains, below ground level, indoors, or the like, without being influenced by limitations of the radio network controller 1 in size and cost, which enables expansion of a communication area.

In addition, the wireless base stations 3-1 to 3-n can be located even in an area in which the quality of communication degrades, even if the area is not within a valley or in a place between mountains, below ground level, indoors, without being influenced by the above limitations of the radio network controller 1, whereby communication quality can be improved.

It is apparent that the present invention is not limited to the above embodiments but may be changed and modified without departing from the scope and spirit of the invention.

## Claims

1. A mobile network comprising:
a plurality of first wireless base stations (2-1 to 2-m) to which first mobile telecommunication terminals are connected;
a plurality of second wireless base stations (3-1 to 3-n) to which second mobile telecommunication terminals are connected;
a wireless network controlling unit (1) to control said first and second wireless base stations (3-1 to 3-n); and
at least one wireless network multiplexing unit (4) installed between said second wireless base stations (3-1 to 3-n) and said wireless network controlling unit (1) and used to connect said second wireless base stations (3-1 to 3-n) to said wireless network controlling unit (1).

2. The mobile network according to Claim 1, wherein said wireless network controlling unit (1) recognizes said wireless network multiplexing unit (4) to be connected to said wireless network controlling unit (1) as a single virtual first wireless base station.

3. The mobile network according to Claim 1, wherein said wireless network multiplexing unit (4) comprises an identification tag assigning section to assign an identification tag to identify each of said second wireless base stations (3-1 to 3-n), at time of start of operations of said wireless network multiplexing unit (4) and of said second wireless base stations (3-1 to 3-n) operating under direct control of said wireless network multiplexing unit (4).

4. The mobile network according to Claim 3, wherein said wireless network multiplexing unit (4) comprises a storage device to store corresponding relations between the identification tags and said second wireless base stations (3-1 to 3-n) operating under the direct control of said wireless network multiplexing unit (4).

5. The mobile network according to Claim 3, wherein said wireless network multiplexing unit (4) relays a signal between said second wireless base stations (3-1 to 3-n) and said wireless network controlling unit (1) according to said identification tag.

6. The mobile network according to Claim 3, wherein said wireless network controlling unit (1) is configured not to use said identification tag for processing to be performed on said second wireless base stations (3-1 to 3-n).

7. The mobile network according to Claim 3, wherein said second wireless base stations (3-1 to 3-n) operating under the direct control of said wireless network multiplexing unit (4) each add said identification tag to a signal to be transmitted from each of said second wireless base stations (3-1 to 3-n) to said wireless network controlling unit (1).

8. A wireless network multiplexing unit (4) which makes up a mobile network together with: a plurality of first wireless base stations (2-1 to 2-m) to which first mobile telecommunication terminals are connected; a plurality of second wireless base stations (3-1 to 3-n) to which second mobile telecommunication terminals are connected; a wireless network controlling unit (1) to control said first and second wireless base stations (3-1 to 3-n); the wireless network multiplexing unit (4) which is installed between said second wireless base stations (3-1 to 3-n) and said wireless network controlling unit (1) and used to connect said second wireless base stations (3-1 to 3-n) to said wireless network controlling unit (1).

9. The wireless network multiplexing unit (4) according to Claim 8, wherein said wireless network multiplexing unit (4) is recognized as a single virtual first wireless base station by said wireless network controlling unit (1).

10. The wireless network multiplexing unit (4) according to Claim 8, comprising an identification tag assigning section to assign an identification tag to identify each of said second wireless base stations (3-1 to 3-n), at time of start of operations of said wireless network multiplexing unit (4) and of said second wireless base stations (3-1 to 3-n) operating under a direct control of said wireless network multiplexing unit (4).

11. The wireless network multiplexing unit (4) according to Claim 10, further comprising a storage device to store corresponding relations between the identification tags and said second wireless base stations (3-1 to 3-n) operating under the direct control of said wireless network multiplexing unit (4).

12. The wireless network multiplexing unit (4) according to Claim 10, which is so configured to relay a signal between said second wireless base stations (3-1 to 3-n) and said wireless network controlling unit (1) according to said identification tag.

13. The wireless network multiplexing unit (4) according to Claim 10, wherein said second wireless base stations (3-1 to 3-n) operating under the direct control of said wireless network multiplexing unit (4) each are configured to add said identification tag to a signal to be transmitted from each of said second wireless base stations (3-1 to 3-n) to said wireless network controlling unit (1).

14. A method for controlling a communication path
of a mobile network comprising:
a plurality of first wireless base stations (2-1 to 2-m) to which first mobile telecommunication terminals are connected;
a plurality of second wireless base stations (3-1 to 3-n) to which second mobile telecommunication terminals are connected;
a wireless network controlling unit (1) to control said first and second wireless base stations (3-1 to 3-n) ; the method comprising:
installing at least one wireless network multiplexing unit (4) between said second wireless base stations (3-1 to 3-n) and said wireless network controlling unit (1); and
connecting said second wireless base stations (3-1 to 3-n) to said wireless network controlling unit (1) via said wireless network multiplexing unit (4).

15. The method for controlling the communication path according to Claim 14, wherein said wireless network controlling unit (1) recognizes said wireless network multiplexing unit (4) to be connected to said wireless network controlling unit (1) as a single virtual first wireless base station.

16. The method for controlling the communication path according to Claim 14, wherein said wireless network multiplexing unit (4) performs an identification tag assigning process to assign an identification tag to identify each of said second wireless base stations (3-1 to 3-n), at time of start of operations of said wireless network multiplexing unit (4) and of said second wireless base stations (3-1 to 3-n) operating under a direct control of said wireless network multiplexing unit (4).

17. The method for controlling the communication path according to Claim 16, wherein said wireless network multiplexing unit (4) performs a storing process to store corresponding relations between the identification tags and said second wireless base stations (3-1 to 3-n) operating under the direct control of said wireless network multiplexing unit (4).

18. The method for controlling the communication path according to Claim 16, wherein said wireless network multiplexing unit (4) relays a signal between said second wireless base stations (3-1 to 3-n) and said wireless network controlling unit (1) according to said identification tag.

19. The method for controlling the communication path according to Claim 16, wherein said wireless network controlling unit (1) is configured not to use said identification tag for processing to be performed on said second wireless base stations (3-1 to 3-n) .

20. The method for controlling the communication path according to Claim 16, wherein said second wireless base stations (3-1 to 3-n) operating under the direct control of said wireless network multiplexing unit (4) each add said identification tag to a signal to be transmitted from each of said second wireless base stations (3-1 to 3-n) to said wireless network controlling unit (1).
